# EUROPÄISCHE PATENTSCHRIFT

(11) **EP 4 012 132 B1**
(45) Veröffentlichungstag und Bekanntmachung des Hinweises auf die Patenterteilung: **06.03.2024**
(21) Anmeldenummer: 21207047.8
(22) Anmeldetag: 09.11.2021
(51) Int. Cl.: E04B 2/96, E06B 3/968, E04D 3/08, F16B 7/18, F16B 7/04, E04B 1/58

(54) **T-VERBINDUNG FÜR PFOSTEN-RIEGEL-KONSTRUKTIONEN UND PFOSTEN-RIEGEL-KONSTRUKTION MIT EINER DERARTIGEN T-VERBINDUNG**
T-CONNECTION FOR POST-BEAM STRUCTURE AND A POST-BEAM STRUCTURE WITH SUCH A T-CONNECTION
RACCORD EN T POUR MONTANTS ET TRAVERSES ET MONTANTS ET TRAVERSES DOTCOMPRENANT UN TEL RACCORD EN T

(30) Priorität: 08.12.2020 DE 102020132662
(43) Veröffentlichungstag der Anmeldung: 15.06.2022
(73) Patentinhaber: Raico Bautechnik GmbH, 87772 Pfaffenhausen (DE)
(72) Erfinder: Filser, Daniel, 86874 Zaisertshofen (DE); Raffler, Christoph, 87745 Eppishausen (DE)
(74) Vertreter: Charrier Rapp & Liebau

(56) Entgegenhaltungen:
- EP-A1- 0 814 215
- CN-A- 104 674 991
- GB-A- 2 176 217
- US-A- 5 042 216

## Beschreibung

Die Erfindung betrifft eine T-Verbindung für Pfosten-Riegel-Konstruktionen, insbesondere von Fassaden, Lichtdächem und Wintergärten, nach dem Oberbegriff des Anspruchs 1. Die Erfindung betrifft außerdem eine Pfosten-Riegel-Konstruktion, bei der rechtwinklig zueinander angeordnete Pfosten- und Riegelprofile durch eine derartige T-Verbindung miteinander verbunden sind.

Aus der CN 104 674 991 A ist eine derartige T-Verbindung zwischen einem Pfosten- und Riegelprofil bekannt. Diese Verbindungseinrichtung enthält mehrere an einer Seitenwand eines Pfostenprofils in einer vorgegebenen Anordnung befestigbare stiftförmige Verbindungselemente und ein auf die stiftförmigen Verbindungselemente formschlüssig aufsteckbares und in ein Riegelprofil einschiebbares Verbindungsprofil.

Weitere T-Verbindungen sind aus US 5 042 216 A, EP 0 814 215 A1 und GB 2 176 217 A bekannt.

Aufgabe der Erfindung ist es, eine T-Verbindung der eingangs genannten Art und eine Pfosten-Riegel-Konstruktion mit einer solchen T-Verbindung zu schaffen, die eine verbesserte lasttragende Verbindung von Pfosten- und Riegelprofilen ermöglichen.

Diese Aufgabe wird durch eine T-Verbindung mit den Merkmalen des Anspruchs 1 und durch eine Pfosten-Riegel-Konstruktion mit den Merkmalen des Anspruchs 9 gelöst. Zweckmäßige Weiterbildungen und vorteilhafte Ausführungsformen der Erfindung sind Gegenstand der Unteransprüche.

Bei der erfindungsgemäßen T-Verbindung enthält die zur formschlüssigen Verbindung eines Riegelprofils mit einem Pfostenprofil vorgesehene Verbindungseinrichtung mehrere an einer Seitenwand des Pfostenprofils in einer vorgegebenen Anordnung befestigbare stiftförmige Verbindungselemente und ein auf die stiftförmigen Verbindungselemente formschlüssig aufsteckbares und in das Riegelprofil einschiebbares Verbindungsprofil. Die stiftförmigen Verbindungselemente sind dabei über einen am Pfostenprofil angeordneten Verbinder fest mit dem Pfostenprofil verbunden. Das Verbindungsprofil weist mehrere an die Außenkontur der stiftförmigen Verbindungselemente und an deren Anordnung angepasste Einschubbereiche zum Einschieben und zur formschlüssigen Aufnahme der stiftförmigen Verbindungselemente auf. Eine derartige T-Verbindung ist äußerst stabil und ermöglicht die Abtragung sehr hoher Glas- oder Füllungsgewichte, so dass z.B. auch ein Vordach an einer Fassadenkonstruktion befestigt werden kann. Durch die formschlüssige Verbindung des in das Riegelprofil einschiebbaren Verbindungsprofils mit den an dem Pfostenprofil befestigten Verbindungselementen kann das Riegelprofil ein hohes Torsionsmoment aufnehmen. Gleichzeitig kann durch das im Riegelprofil angeordnete Verbindungsprofil die Riegeldurchbiegung deutlich verringert und dadurch die Lastaufnahme verbessert werden.

Der Verbinder besteht erfindungsgemäß aus einem z.B. plattenförmigen ersten Verbinderteil und einem mit diesem fest verbunden, z.B. als Anschlussprofil ausgebildeten zweiten Verbinderteil. Das erste Verbinderteil weist dabei eine an die Innenkontur angepasste Außenkontur auf. Das als Anschlussprofil ausgebildete zweite Verbinderteil kann in vorteilhafter Weise denselben Querschnitt wie das Verbindungsprofil aufweisen.

In einer vorteilhaften Ausgestaltung weist das Verbindungsprofil an einer inneren Stirnseite eine Einbuchtung mit drei nebeneinanderliegenden Einschubbereichen zur Aufnahme dreier dreiecksförmig angeordneter stiftförmiger Verbindungselemente auf. Das Verbindungsprofil kann außerdem an gegenüberliegenden Seitenflächen jeweils einen wellenförmigen Bereich mit jeweils zwei seitlichen Aufnahmebereichen zur Aufnahme von vier weiteren Verbindungselementen enthalten. Dadurch kann eine genaue und sichere Positionierung des Riegelprofils erreicht werden.

In einer stabilen Bauweise können die stiftförmigen Verbindungselemente durch ein in das Pfostenprofil einsetzbares Halteprofil fest mit dem Pfostenprofil verbunden sein. Dabei können die stiftförmigen Verbindungselemente über einen Gewindezapfen in entsprechende Gewindebohrungen im Halteprofil eingeschraubt sein. Zweckmäßigerweise weist auch das Halteprofil denselben Querschnitt wie das Verbindungsprofil auf.

Eine erfindungsgemäße Pfosten-Riegel-Konstruktion enthält miteinander verbundene Pfosten- und Riegelprofile, die durch die vorstehend erläuterte und im Folgenden noch näher beschriebene T-Verbindung miteinander verbunden sind.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: ein Ausführungsbeispiel einer T-Verbindung zwischen einem Pfosten- und Riegelprofil im auseinandergebauten Zustand;
- **Figur 2**: die T-Verbindung zwischen einem Pfosten- und Riegelprofil von Figur 1 im zusammengebauten Zustand;
- **Figur 3**: die T-Verbindung von Figur 1 in einer Explosionsansicht;
- **Figur 4**: einen Querschnitt durch das Riegelprofil und
- **Figur 5**: einen Querschnitt durch das Pfostenprofil.

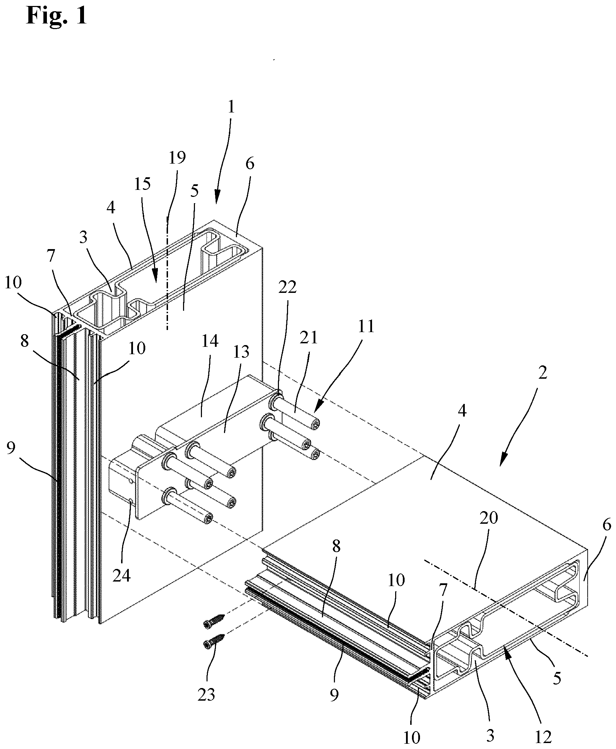

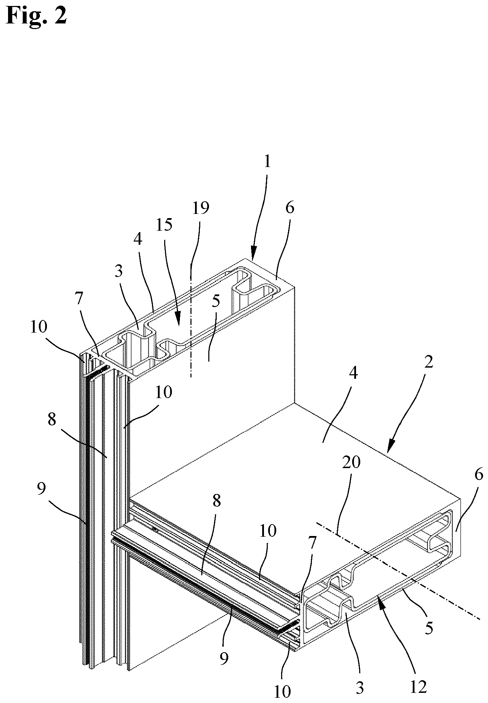

In den Figuren 1 bis 3 ist ein Ausführungsbeispiel einer T-Verbindung zwischen einem Pfostenprofil 1 und einem quer dazu verlaufenden Riegelprofil 2 einer Pfosten-Riegel-Konstruktion für Fassaden, Wintergärten, Lichtdächer und dgl. in verschiedenen Darstellungen gezeigt. Die beiden Pfosten- und Riegelprofile 1 und 2 sind in der gezeigten Ausführung als Hohlprofile mit einem Hohlraum 3 und identischem Querschnitt ausgeführt. Sie weisen jeweils zwei zueinander parallele Seitenwände 4 und 5 und zwei zu den Seitenwänden 4 und 5 rechtwinklige innere und äußere Stirnwände 6 und 7 auf. Die zur Außenseite der Pfosten-Riegel-Konstruktion weisende äußere Stirnwand 7 enthält einen nach außen vorstehenden Steg 8 mit einem und zur Außenseite hin offenen Aufnahmekanal 9 für Befestigungsschrauben oder andere Befestigungselemente, durch die hier nicht dargestellte Halteprofile oder eine Haltekonstruktion zur Halterung von Glasscheiben oder anderen Fassadenelementen an der äußeren Stirnwand 7 befestigt werden können. Rechts und links des Stegs 8 sind an der äußeren Stirnwand 7 außerdem in Längsrichtung des Pfosten- bzw. Riegelprofils 1 bzw. 2 verlaufende Aufnahmenuten 10 zur Aufnahme einer Innendichtung oder eines Dichtstücks vorgesehen.

Das Pfostenprofil 1 und das Riegelprofil 2 sind bei der gezeigten Ausführung in Form eines z.B. im Strangpressverfahren hergestellten Metallprofilrohrs ausgeführt, das aus Stahl oder Aluminium bestehen kann. Sie können aber auch als Schweißkonstruktion aus einem entsprechend gebogenen und verschweißten Metallblech, als Holz- bzw. Kunststoffkonstruktion oder dgl. hergestellt sein. Der nach außen vorstehende Steg 8 an der zur Außenseite gerichteten und zur Befestigung von Glasscheiben oder anderer Fassadenelemente dienenden äußeren Stirnwand 7 weist bei dem gezeigten Ausführungsbeispiel einen als Schraubkanal ausgeführten Aufnahmekanal 9 auf. In den Aufnahmekanal 9 können z.B. mit einem Schneidgewinde versehene Befestigungsschrauben zur Befestigung von Halteprofilen oder weiteren Trag- oder Fassadenelementen eingeschraubt werden.

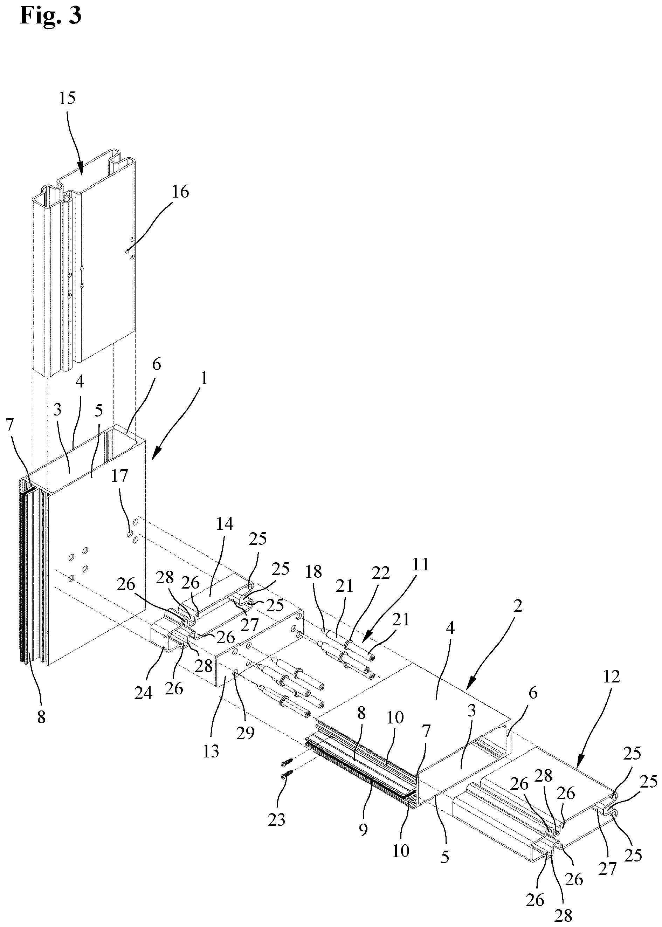

Die Verbindung zwischen dem Pfostenprofil 1 und dem Riegelprofil 2 erfolgt über eine Verbindungseinrichtung, die mehrere an der Seitenwand 5 des Pfostenprofils 1 in einer vorgegebenen Anordnung bzw. einem vorbestimmten Muster befestigbare stiftförmige Verbindungselemente 11 und ein auf die stiftförmigen Verbindungselemente 11 formschlüssig aufsteckbares und in das Riegelprofil 2 einschiebbares Verbindungsprofil 12 enthält. Die stiftförmigen Verbindungselemente 11 sind über einen Verbinder mit einem plattenförmigen ersten Verbinderteil 13 und einem als Anschlussprofil ausgebildeten zweiten Verbinderteil 14 fest mit einem in das Pfostenprofil 1 eingeschobenen Halteprofil 15 verbunden. Hierzu weist das Halteprofil 15 in Figur 3 gezeigte Gewindebohrungen 16 und das Pfostenprofil 1 mit diesen fluchtende Durchgangsbohrungen 17 für einen Gewindezapfen 18 am inneren Ende der stiftförmigen Verbindungselemente 11 auf. Die rechtwinklig zu einer Längsachse 19 des vertikalen Pfostenprofils 1 und parallel zu einer Längsachse 20 des horizontalen Riegelprofils 2 verlaufenden stiftförmigen Verbindungselemente 11 sind mit zylindrischen Schaftteilen 21 und einem mittleren Ringbund 22 versehenen. Über Schrauben 23 und entsprechende Gewindebohrungen 24 in einer vorderen Seitenwand des zweiten Verbinderteils 14 kann das Riegelprofil 2 gegen Verschiebung gesichert an dem Pfostenprofil 1 gehalten werden.

Das plattenförmige erste Verbinderteil 13 weist eine an die Innenkontur des Riegelprofils 2 angepasste Außenkontur auf, so dass das Verbinderteil 13 formschlüssig und möglichst spaltfrei im Riegelprofil 2 aufgenommen werden kann. Dadurch ist eine besonders stabile Halterung des Riegelprofils 2 möglich. Das erste Verbinderteil 13 kann stirnseitig auf das zweite Verbinderteil 14 aufgesetzt und mit diesem verschweißt sein. Das erste Verbinderteil 13 kann aber auch in das zweite Verbinderteil 14 eingesetzt und z.B. durch Verschweißen fest mit diesem verbunden sein. Durch das plattenförmige erste Verbinderteil 13 kann das als Profil ausgebildete zweite Verbinderteil 14 ausgesteift werden. Außerdem kann die Positionierung und Halterung der stiftförmigen Verbindungselemente 11 verbessert werden. Das plattenförmige erste Verbinderteil 13 ermöglich es ferner, dass die stiftförmigen Verbindungselemente 11 miteinander verspannt werden.

Wie aus den Figuren 3 bis 5 hervorgeht, weisen sowohl das im Riegelprofil 2 angeordnete Verbindungsprofil 12 als auch das in das Pfostenprofil 1 eingesetzte Halteprofil 15 und auch das als Anschlussprofil ausgebildete zweite Verbinderteil 14 denselben Querschnitt auf. Sie können also einfach und kostengünstig aus einem einzigen, vorzugsweise als rollgeformtes Stahlprofil ausgeführten Strangprofil hergestellt werden.

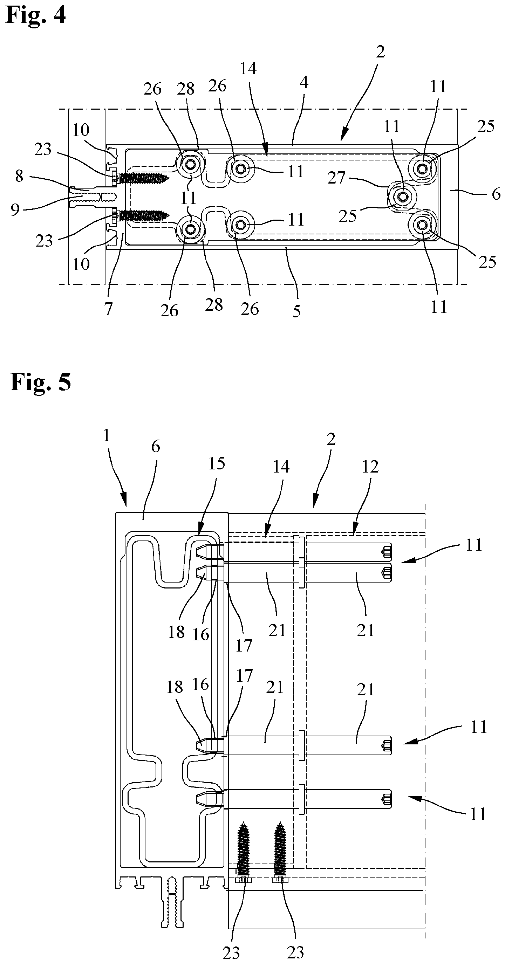

In den Figuren 3 und 4 ist erkennbar, dass das im Riegelprofil 1 angeordnete Verbindungsprofil 12 und auch das als Anschlussprofil ausgebildete zweite Verbinderteil 14 mehrere an die Außenkontur der zylindrischen Schaftteile 21 der stiftförmigen Verbindungselemente 11 und an deren Anordnung angepasste Einschubbereiche 25 und 26 zum Einschieben und zur formschlüssigen Aufnahme der stiftförmigen Verbindungselemente 11 enthalten. In der gezeigten Ausführung weisen das Verbindungsprofil 12 und das Verbinderteil 14 an ihrer der inneren Stirnwand 6 des Riegelprofils 2 zugewandten inneren Stirnseite eine Einbuchtung 27 mit drei nebeneinanderliegenden Einschubbereichen 25 für die Aufnahme dreier dreiecksförmig angeordneter stiftförmiger Verbindungselemente 11 auf. An seinen beiden den Seitenwänden 4 und 5 des Riegelprofils 2 zugewandten Seitenflächen weist das Verbindungselement 11 jeweils einen wellenförmigen Bereich 28 mit jeweils zwei seitlichen Einschubbereichen 26 zum Einschieben und zur formschlüssigen Aufnahme von vier weiteren Verbindungselementen 11 auf. Über den Eingriff der stiftförmigen Verbindungselemente 11 in die Einschubbereiche 25 und 26 wird eine sichere und positionsgenaue Verbindung zwischen dem Pfostenprofil 1 und dem Riegelprofil 2 erreicht.

Aus Figur 5 ist ersichtlich, dass auch das in das Pfostenprofil 1 eingeschobene Halteprofil 15 denselben Querschnitt wie das Verbindungsprofil 12 und das Verbinderteil 14 aufweist. Die stiftförmigen Verbindungselemente 11 ragen durch die Durchgangsbohrungen 17 im Pfostenprofil 1 und sind mit ihren Gewindezapfen 18 in die Gewindebohrungen 16 im Halteprofil 15 eingeschraubt. Mit ihren inneren zylindrischen Schaftteilen 21 ragen die stiftförmigen Verbindungselemente 11 durch in Figur 3 gezeigte Bohrungen 29 in dem plattenförmigen ersten Verbinderteil 13 und die Einschubbereiche 25 und 26 des zweiten Verbinderteils 14. Dadurch wird eine sichere Halterung der stiftförmigen Verbindungselemente 11 am Pfostenprofil 1 erreicht. Auf die äußeren zylindrischen Schaftteile 21 der stiftförmigen Verbindungselemente 11 ist das Verbindungsprofil 12 zusammen mit dem Riegelprofil 2 aufsteckbar. Über die Schrauben 23 kann dann das Riegelprofil 2 gesichert werden.

### Bezugszeichenliste

- 1: Pfostenprofil
- 2: Riegelprofil
- 3: Hohlraum
- 4: Seitenwand
- 5: Seitenwand
- 6: Innere Stirnwand
- 7: Äußere Stirnwand
- 8: Steg
- 9: Aufnahmekanal
- 10: Aufnahmenut
- 11: Stiftförmiges Verbindungselement
- 12: Verbindungsprofil
- 13: Erstes Verbinderteil
- 14: Zweites Verbinderteil
- 15: Halteprofil
- 16: Gewindebohrung
- 17: Durchgangsbohrung
- 18: Gewindezapfen
- 19: Längsachse des Pfostenprofils
- 20: Längsachse des Riegelprofils
- 21: Schaftteil
- 22: Ringbund
- 23: Schraube
- 24: Gewindebohrung
- 25: Einschubbereich
- 26: Einschubbereich
- 27: Einbuchtung
- 28: Wellenförmiger Bereich
- 29: Bohrung

## Patentansprüche

1. T-Verbindung für Pfosten-Riegel-Konstruktionen von Fassaden, Lichtdächern und Wintergärten, die eine Verbindungseinrichtung zur formschlüssigen Verbindung eines Riegelprofils (2) mit einem Pfostenprofil (1), ein Riegelprofil (2) und ein Pfostenprofil (1) enthält, wobei die Verbindungeinrichtung mehrere an einer Seitenwand (5) des Pfostenprofils (1) in einer vorgegebenen Anordnung befestigbare stiftförmige Verbindungselemente (11) und ein auf die stiftförmigen Verbindungselemente (11) formschlüssig aufsteckbares und in das Riegelprofil (2) einschiebbares Verbindungsprofil (12) enthält, wobei die stiftförmigen Verbindungselemente (11) über einen am Pfostenprofil (1) angeordneten Verbinder (13, 14) fest mit dem Pfostenprofil (1) verbunden sind und das Verbindungsprofil (12) mehrere an die Außenkontur der stiftförmigen Verbindungselemente (11) und an deren Anordnung angepasste Einschubbereiche (25, 26) zum Einschieben und zur formschlüssigen Aufnahme der stiftförmigen Verbindungselemente (11) enthält, **dadurch gekennzeichnet, dass** der Verbinder (13, 14) aus einem ersten Verbinderteil (13) und einem mit diesem fest verbundenen zweiten Verbinderteil (14) besteht, wobei das erste Verbinderteil (13) eine an die Innenkontur des Riegelprofils (2) angepasste Außenkontur aufweist.

2. T-Verbindung nach Anspruch 1, **dadurch gekennzeichnet, dass** das Verbindungsprofil (12) an einer inneren Stirnseite eine Einbuchtung (27) mit drei nebeneinanderliegenden Einschubbereichen (25) zur Aufnahme dreier dreiecksförmig angeordneter stiftförmiger Verbindungselemente (11) enthält.

3. T-Verbindung nach Anspruch 1 oder 2, **dadurch gekennzeichnet, dass** das Verbindungsprofil (12) an gegenüberliegenden Seitenflächen jeweils einen wellenförmigen Bereich (28) mit jeweils zwei seitlichen Einschubbereichen (26) zur Aufnahme von vier Verbindungselementen (11) aufweist.

4. T-Verbindung nach einem der Ansprüche 1 bis 3, **dadurch gekennzeichnet, dass** die stiftförmigen Verbindungselemente (11) zylindrische Schaftteile (21) zur Anordnung in den Einschubbereichen (25, 26) des Verbindungsprofils (12) aufweisen.

5. T-Verbindung nach einem der vorangehenden Ansprüche, **dadurch gekennzeichnet, dass** das zweite Verbinderteil (14) als Anschlussprofil mit demselben Querschnitt wie das Verbindungsprofil (12) ausgebildet ist.

6. T-Verbindung nach einem der Ansprüche 1 bis 5, **dadurch gekennzeichnet, dass** die stiftförmigen Verbindungselemente (11) durch ein in das Pfostenprofil (1) einsetzbares Halteprofil (15) fest mit dem Pfostenprofil (1) verbunden sind.

7. T-Verbindung nach Anspruch 6, **dadurch gekennzeichnet, dass** die stiftförmigen Verbindungselemente (11) über einen Gewindezapfen (18) in entsprechende Gewindebohrungen (16) im Halteprofil (15) eingeschraubt sind.

8. T-Verbindung nach Anspruch 6 oder 7, **dadurch gekennzeichnet, dass** das Halteprofil (15) denselben Querschnitt wie das Verbindungsprofil (12) aufweist.

9. Pfosten/Riegel-Konstruktion, insbesondere für Fassaden und Wintergärten, die miteinander verbundene Pfostenprofile (1) und Riegelprofile (2) enthält, **dadurch gekennzeichnet, dass** die Pfostenprofile (1) und die Riegelprofile (2) durch eine T-Verbindung nach einem der Ansprüche 1 bis 8 miteinander verbunden sind.

## Claims

1. T-connection for post-beam-structures of facades, skylights and conservatories, comprising a connecting device for a form-fit connection of a beam profile (2) to a post profile (1), a beam profile (2) and a post profile (1), wherein the connecting device contains a plurality of pin-shaped connecting elements (11) which can be fastened to a side wall (5) of the post profile (1) in a predetermined arrangement and a connecting profile (12) which can be plugged onto the pin-shaped connecting elements (11) in a form-fitting manner and can be inserted into the beam profile (2), wherein the pin-shaped connecting elements (11) are firmly connected to the post profile (1) via a connector (13, 14) arranged on the post profile (1) and the connecting profile (12) comprises a plurality of insertion regions (25, 26) adapted to the outer contour of the pin-shaped connecting elements (11) and to their arrangement for inserting and positively receiving the pin-shaped connecting elements (11), **characterized in that** the connector (13, 14) consists of a first connector part (13) and a second connector part (14) firmly connected thereto, the first connector part (13) having an outer contour adapted to the inner contour of the beam profile (2).

2. T-connection according to claim 1, **characterized in that** the connecting profile (12) contains on an inner end face an indentation (27) with three adjacent insertion regions (25) for receiving three triangularly arranged pin-shaped connecting elements (11).

3. T-connection according to claim 1 or 2, **characterized in that** the connecting profile (12) has a wave-shaped region (28) on opposite side surfaces, each with two lateral insertion regions (26) for receiving four connecting elements (11).

4. T-connection according to one of claims 1 to 3, **characterized in that** the pin-shaped connecting elements (11) have cylindrical shank parts (21) for arrangement in the insertion regions (25, 26) of the connecting profile (12).

5. T-connection according to one of the preceding claims, **characterized in that** the second connector part (14) is designed as a connector profile with the same cross-section as the connecting profile (12).

6. T-connection according to one of claims 1 to 5, **characterized in that** the pin-shaped connecting elements (11) are firmly connected to the post profile (1) by a holding profile (15) which can be inserted into the post profile (1).

7. T-connection according to claim 6, **characterized in that** the pin-shaped connecting elements (11) are screwed into corresponding threaded bores (16) in the holding profile (15) via a threaded pin (18).

8. T-connection according to claim 6 or 7, **characterized in that** the holding profile (15) has the same cross-section as the connecting profile (12).

9. Post-beam-structure, in particular for facades and conservatories, which contains mutually connected post profiles (1) and beam profiles (2), **characterized in that** the post profiles (1) and the beam profiles (2) are connected to one another by a -T-connection according to one of claims 1 to 8.

## Revendications

1. Liaison en T pour des structures à montants et traverses de façades, verrières et jardins d'hiver, qui contient un équipement de liaison pour la liaison par coopération de forme d'un profilé de traverse (2) avec un profilé de montant (1), un profilé de traverse (2) et un profilé de montant (1), dans laquelle l'équipement de liaison contient plusieurs éléments de liaison (11) en forme de broche pouvant être fixés contre une paroi latérale (5) du profilé de montant (1) selon un agencement prédéfini et un profilé de liaison (12) pouvant être enfiché par coopération de forme sur les éléments de liaison (11) en forme de broche et pouvant être poussés jusque dans le profilé de traverse (2), dans laquelle les éléments de liaison (11) en forme de broche sont solidement reliés au profilé de montant (1) via un organe de liaison (13, 14) agencé contre le profilé de montant (1) et le profilé de liaison (12) contient plusieurs zones de poussée (25, 26) ajustées au contour extérieur des éléments de liaison (11) en forme de broche et à leur agencement pour la poussée et pour la réception par coopération de forme des éléments de liaison (11) en forme de broche, **caractérisée en ce que** l'organe de liaison (13, 14) se compose d'une première partie d'organe de liaison (13) et d'une seconde partie d'organe de liaison (14) solidement reliée à celle-ci, dans laquelle la première partie d'organe de liaison (13) présente un contour extérieur ajusté au contour intérieur du profilé de traverse (2).

2. Liaison en T selon la revendication 1, **caractérisée en ce que** le profilé de liaison (12) contient contre un côté frontal intérieur une anfractuosité (27) avec trois zones de poussée (25) situées les unes à côté des autres pour la réception de trois éléments de liaison (11) en forme de broche agencés de façon à former un triangle.

3. Liaison en T selon la revendication 1 ou 2, **caractérisée en ce que** le profilé de liaison (12) présente contre des surfaces latérales opposées respectivement une zone ondulée (28) avec respectivement deux zones de poussée (26) latérales pour la réception de quatre éléments de liaison (11).

4. Liaison en T selon l'une des revendications 1 à 3, **caractérisée en ce que** les éléments de liaison (11) en forme de broche présentent des parties de tige (21) cylindriques pour l'agencement dans les zones de poussée (25, 26) du profilé de liaison (12).

5. Liaison en T selon l'une des revendications précédentes, **caractérisée en ce que** la seconde partie d'organe de liaison (14) est conçue en tant que profilé de raccordement avec la même coupe transversale que le profilé de liaison (12).

6. Liaison en T selon l'une des revendications 1 à 5, **caractérisée en ce que** les éléments de liaison (11) en forme de broche sont solidement reliés au profilé de montant (1) par un profilé de retenue (15) pouvant être utilisé dans le profilé de montant (1).

7. Liaison en T selon la revendication 6, **caractérisée en ce que** les éléments de liaison (11) en forme de broche sont vissés via une goupille filetée (18) dans des alésages filetés (16) correspondants dans le profilé de retenue (15).

8. Liaison en T selon la revendication 6 ou 7, **caractérisée en ce que** le profilé de retenue (15) présente la même coupe transversale que le profilé de liaison (12).

9. Structure à montants/traverses, en particulier pour des façades et des jardins d'hiver, qui contient des profilés de montant (1) et des profilés de traverse (2) reliés ensemble, **caractérisée en ce que** les profilés de montant (1) et les profilés de traverse (2) sont reliés ensemble par une liaison en T selon l'une des revendications 1 à 8.
